# EUROPEAN PATENT SPECIFICATION

(11) **EP 1 233 871 B1**
(45) Date of publication and mention of the grant of the patent: **01.02.2006**
(21) Application number: 00989921.2
(22) Date of filing: 30.11.2000
(51) Int. Cl.: B60C 11/04, B60C 11/01, B60C 11/13

(54) **TYRE FOR VEHICLE WHEELS, PARTICULARLY FOR HEAVY DUTY VEHICLES SUCH AS LORRIES AND THE LIKE**
FAHRZEUGRÄDERLUFTREIFEN, INSBESONDERE FÜR LKWKRAFTFAHRZEUG WIE Z.B. LASTFAHRZEUGE UND DERGLEICHEN
PNEU POUR ROUES DE VEHICULES, EN PARTICULIER POUR VEHICULES LOURDS TELS QUE DES CAMIONS ET ANALOGUE

(30) Priority: 01.12.1999 EP 99830749; 19.01.2000 US 176812 P
(43) Date of publication of application: 28.08.2002
(73) Proprietor: PIRELLI PNEUMATICI Società per Azioni, 20126 Milano (IT)
(72) Inventor: BETTIOL, Flavio Junior, 09812-330 Sao Paolo, SP (BR); CAMPANA, Luigi, 20154 Milano (IT)
(74) Representative: Giannesi, Pier Giovanni
(86) International application number: PCT/EP2000/011986
(87) International publication number: WO 2001/039993

(56) References cited:
- EP-A- 0 369 932
- EP-A- 0 578 216
- NN-A-
- US-A- 3 841 374
- US-A- 3 858 633
- US-A- 4 550 756
- PATENT ABSTRACTS OF JAPAN vol. 018, no. 177 (M-1582), 25 March 1994 (1994-03-25) & JP 05 338411 A (HINO MOTORS LTD), 21 December 1993 (1993-12-21)

## Description

The present invention relates to a tyre for motor vehicles, and more particularly to a tyre for heavy duty vehicles such as lorries and the like which are intended for mixed operation, in other words for use both on roads with good surface conditions and on rough and irregular grounds such as those generally present in quarries and/or on building sites.

As is known, heavy duty vehicles such as lorries are generally fitted with tyres cf different types according to whether they are to be fitted on the traction (driving) axles or on the driven (steering) axles.

This differentiation is due to the different performances and behavioural characteristics required from tyres according to the axle on which they are fitted and on the type of operation for which they are intended.

For example, for operation predominantly on roads with good surface conditions, the tyres fitted on the driving wheels, generally the rear wheels, are mainly required to have good traction in any road surface condition, whether dry, wet or icy, and a good regularity of wear which provides a high mileage.

For this purpose, tyres with a tread of the so-called "lug" type are used, in other words tyres having a tread provided with a plurality of lugs formed by a combination of circumferential channels intersected by transverse channels, of considerable width, normally not less than approximately 5 mm. The dimensions and orientation of the transverse channels have a considerable effect on the ground-gripping action exerted by the tread.

On the other hand, the tyres fitted on the driven axles, generally the front axles, are primarily required to have a high directional stability, good grip and lateral roadholding, together with low abradability and high tear resistance, to provide a good mileage.

For this purpose, therefore, use is made of tyres having a tread of the so-called "grooved" type, in other words a tread provided with grooves of the circumferential type, with a rectilinear or zigzag configuration, which form on the tread a plurality of circumferential ribs, in other words a plurality of continuous circumferential strips which do not have transverse cuts extending over their whole width.

Conversely, for operation on rough and irregular surfaces, and also on muddy and/or sandy surfaces, tyres of the lug type are predominantly used on the front axles as well, although the transverse cuts delimiting said lugs are normally narrower than the transverse cuts of the tyres for use on the driving axles. Thus, there are known tyres whose tread comprises circumferential grooves with a zigzag configuration, creating a plurality of circumferential lugs delimited circumferentially by sipes, in other words by very narrow transverse cuts, each of which interconnects two adjacent circumferential grooves.

This type of tread is described, for example, in EP-384,182 in relation to a tyre for motor vehicles, particularly for medium, and heavy duty vehicles. This tread has a plurality of zigzag circumferential grooves delimited by a pair of shoulder ribs, located on opposite edges of the tread, and a plurality of circumferential rows of lugs delimited by transverse cuts having a width of less than 3 mm. The transverse cuts of each circumferential row of lugs are staggered circumferentially with respect to the transverse cuts of the adjacent row, and have an inclination in the range from 5° to 25° with respect to the direction perpendicular to the outer surface of the tread.

Furthermore, the inclination of the aforesaid cuts with respect to the normal direction of rotation of the tyre is such that, during travel, the reactions transmitted by the ground to the tread in the contact area tend to reduce this inclination with respect to said direction perpendicular to the outer surface of the tread, in order to provide a greater uniformity of wear of the lugs and to avoid the known phenomenon of "saw-tooth" wear.

US 4, 550, 756, corresponding with the preamble of claim 1, shows a pneumatic tyre having a ground tread portion, the tread portion comprising two zigzag circumferentially extending grooves, each groove having a pair of oppositely disposed sidewalls.

Each of the two zigzag circumferential grooves has one blind transverse cut intersecting the respective circumferential groove and extending axially from both sides of the circumferential groove. Axially opposite ends of the blind transverse cut belonginng to the same circumferential groove are disposed on a straight line inclined at an angle of about 30 deg with respect to the axial direction of the tire.

US 3,858,633 illustrates a radial tyre for heavy-duty vehicles comprising a tread having a central portion and two lateral portions. The central portion is formed with at least one circumferential rib and at least two circumferential grooves, and each lateral portion is formed with a circumferential zigzag rib and with transverse grooves and blocks.

The present invention relates to a tyre provided with a tread of the "grooved" type, in other words a tread not having transverse cuts extending over its whole width, and designed to be fitted on the steering axles of a medium or heavy duty vehicle, particularly of a motor vehicle designed for mixed use on both roads and rough ground.

The applicant has perceived that, in order to provide a medium or heavy duty vehicle with good directional stability, a high mileage and good roadholding even on particularly rough ground, it is necessary to fit on the front axle of said vehicle a tyre whose tread is provided with circumferential grooves of the zigzag type and which has no open transverse cuts.

The applicant has also found that the above properties are considerably enhanced when the configuration of the aforesaid zigzag circumferential grooves has two or more changes of direction with respect to the circumferential direction of the tyre within a single pitch, in such a way as to produce a large number of ground-gripping fronts of the tread.

The applicant has additionally found that a further enhancement of the aforesaid properties, particularly in terms of roadholding, can be obtained by providing each circumferential groove with at least one blind transverse cut per pitch. More particularly, the geometrical dimensions of these blind transverse cuts, which extend axially preferably from both sides of the circumferential groove, must be such that they do not significantly reduce the width of the solid continuous circumferential zone of the adjacent circumferential ribs, as this would have a negative effect on the desired properties of directional stability and abrasion resistance mentioned above.

Therefore, according to the present invention there is the provision of a tire according to claim 1.

According to further embodiments, the number of said circumferential grooves can be greater than two, although preferably not greater than four; in a preferred embodiment, the tread according to the invention comprises three circumferential grooves delimiting four circumferential ribs, namely two axially outer shoulder ribs and two axially inner intermediate ribs.

According to a further embodiment, all the circumferential grooves are identical to each other and, even more preferably, also the blind transverse cuts are identical to each other. Preferably, the contour profile of each circumferential groove, including the blind transverse cuts, comprises only connecting portions of curvilinear shape.

Further characteristics and advantages will be more clearly understood from a description of a preferred embodiment of the present invention.

This description, given below, relates to the attached drawings, supplied solely for the purpose of explanation and without any restrictive intent, in which:
- Fig. 1: shows a partial cross section of the structure of a tyre according to the invention;
- Fig. 2: shows a partial plan view of a tread pattern according to the invention;
- Fig. 3: shows the cross section of a tread according to the invention, cut along the plane following the line A-B-C-D-E-E'-G on the drawing of Fig. 2;
- Fig. 4: shows a partial cross section of the tread of Fig. 3 through the plane IV-IV of Fig. 2;
- Fig. 5: shows a partial cross section of the tread of Fig. 3 through the plane V-V of Fig. 2;
- Fig. 6: shows a partial cross section of the tread of Fig. 3 through the plane VI-VI of Fig. 2;
- Fig. 7: shows a partial cross section of the tread of Fig. 3 through the plane VII-VII of Fig. 2;
- Fig. 8: shows a partial cross section of the tread of Fig. 3 through the plane VIII-VIII of Fig. 2;
- Fig. 9: shows a succession of gripping fronts, within one pitch and according to a given travel direction, applied to the partial plan view of Fig. 2.

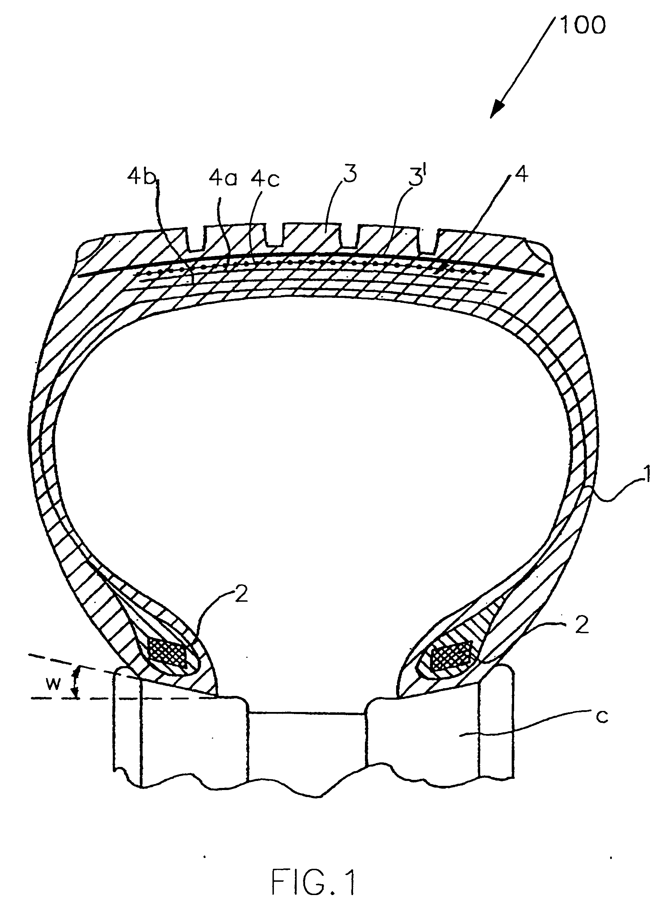

Figure 1 shows a tyre 100 for motor vehicles, designed to be fitted on the front (steering) axle of a medium or heavy duty vehicle of the type used both on road routes and on rough routes, for example on building sites and/or in quarries.

Tyre 100 comprises a carcass of toroidal shape, generally consisting of a single reinforcing ply 1 provided with metal cords lying in radial planes, in other words containing the rotation axis of the tyre. The ends of carcass ply 1 are turned axially from the inside towards the outside, around two metal annular cores 2, usually known as bead wires, which form the reinforcement of the beads, in other words the reinforcement of the radially inner edges of said tyre. As is known, the beads enable the tyre to be fitted on the corresponding mounting rim C. In Fig. 1, tyre 100 is fitted on a rim of the so-called "channel" type, in which the supporting bases for the tyre beads conically diverge outwards at an angle ω of about 15°.

A tread 3 of elastomeric material, within which is formed a relief pattern providing the ground contact of tyre 100, is placed on the crown of said carcass. In the following of the present description and in the claims, the expression "elastomeric material" denotes a rubber mixture as a whole, in other words containing at least one base polymer, the reinforcing fillers, and further product and process additives normally used for manufacturing and curing the tyre.

Tread 3, and the pattern formed in it, must be such as to provide aforesaid tyre 100 with the required behavioural properties, including, for example, directional stability, traction, mileage, silent running and regularity of wear.

Tread 3 has a predetermined thickness and is delimited by an outer surface, designed to contact the ground, and an inner surface covered with a strip 3' made from elastic material and designed to promote the necessary adhesion between the elastomeric material of tread 3 and a so-called belt package 4.

The aforesaid belt package is a circumferentially inextensible annular reinforcing structure, placed between carcass 1 and tread 3. Generally, the belt structure comprises at least two radially superimposed layers 4a, 4b of rubberized fabric, provided with metal reinforcing cords. In each layer 4a, 4b, said cords are placed parallel to each other and cross over the cords of the adjacent layers; preferably, the cords in said layers are also placed symmetrically about the equatorial plane of the tyre. Preferably, the aforesaid belt package has a further, third layer 4c of metal cords of the high-elongation (HE) type, wound circumferentially on the underlying belt layers or only on the axially outer positions of said layers, in such a way that it is wound round only the edges of the aforesaid underlying layers. This further layer helps to oppose the forces, acting in the tyre in operating conditions, which are related to inflation pressure and to centrifugal force, and imparts particular handling properties to the tyre, especially during cornering.

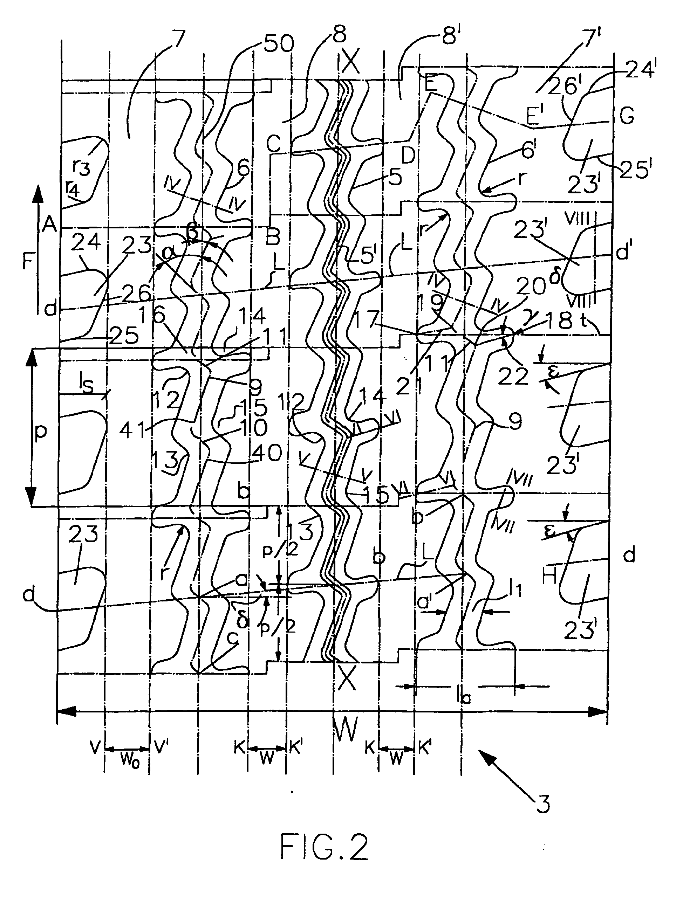

Fig. 2 shows a particular embodiment of a tread 3 of a tyre for motor vehicles according to the present invention. This tread comprises three circumferential grooves 5, 6, 6' of the zigzag type and four circumferential ribs 7, 7', 8, 8' created by the aforesaid grooves. More precisely, Fig. 2 shows a central circumferential groove 5, positioned on the equatorial plane X-X, and a pair of lateral circumferential grooves 6, 6' placed respectively on the left and on the right of said circumferential groove 5. The aforesaid circumferential ribs comprise two axially outer lateral shoulder ribs 7, 7', located respectively on the left of circumferential groove 6 and on the right of circumferential groove 6', and two axially inner intermediate ribs 8, 8', located respectively on the left and on the right of central circumferential groove 5.

Each circumferential groove 5, 6, 6' has a geometrical shape which is repeated identically in the circumferential direction with a predetermined pitch "p".

More precisely, in the embodiment shown in Fig. 2, within each pitch "p" each circumferential groove is developed according to an alternating circumferential succession of substantially rectilinear portions, alternately inclined in two different directions with respect to the circumferential direction.

Preferably, within a single pitch "p", each circumferential groove 5, 6, 6' comprises a first pair of substantially rectilinear portions 40, 41 and a second pair of substantially rectilinear portions 10, 11.

In the embodiment shown in Fig. 2, the zigzag configuration of each circumferential groove 5, 6, 6' within a given pitch "p" is therefore identified by a broken line 9 which is defined by the sequence of the substantially rectilinear portions 40, 10, 41, 11.

Preferably, substantially rectilinear portions 10, 11 are of equal length and are inclined at the same angle α with respect to the circumferential direction 50. Preferably, substantially rectilinear portions 40, 41 are of equal length and are inclined, in the opposite direction to the angle α, at the same angle β with respect to the aforesaid circumferential direction 50.

The dimensional parameters indicated below relate, purely by way of example, to a tread associated with a new prototype tyre of the 13 R 22.5 size, where 13 indicates the maximum width, in other words the maximum chord, of the tyre expressed in inches, said tyre being fitted on the recommended rim and inflated to its nominal operating pressure. Instead, the ranges of the cited values relate to the generic tyre according to the invention.

The tread pattern of said tyres comprises at least two distinct pitches: the pattern of the prototype tyre cited above comprises a short pitch of 62.376 mm, which is repeated 28 times along the circumference of the tyre and is intercalated with a long pitch of 74.228 mm, repeated 24 times along said circumference.

Preferably, the ratio between the length of the linear extension of the mid-line circumferential groove within one pitch, coinciding with the length of broken line 9 in said pitch, and the length of the pitch "p" is not less than 1.12; in a preferred embodiment, angles α and β are 40° and 18° respectively. Preferably, angle α is in the range from 30° to 55°, while angle β is in the range from 12° to 25°.

According to the present invention, the changes of direction provided in each circumferential groove within a single pitch "p" generate two ground-gripping fronts 12, 13 of tread 3 in the direction of rolling of tyre 100 (indicated by arrow F in Fig. 2), and another two ground-gripping fronts 14, 15 of tread 3 in the direction opposite the indicated direction of rotation F.

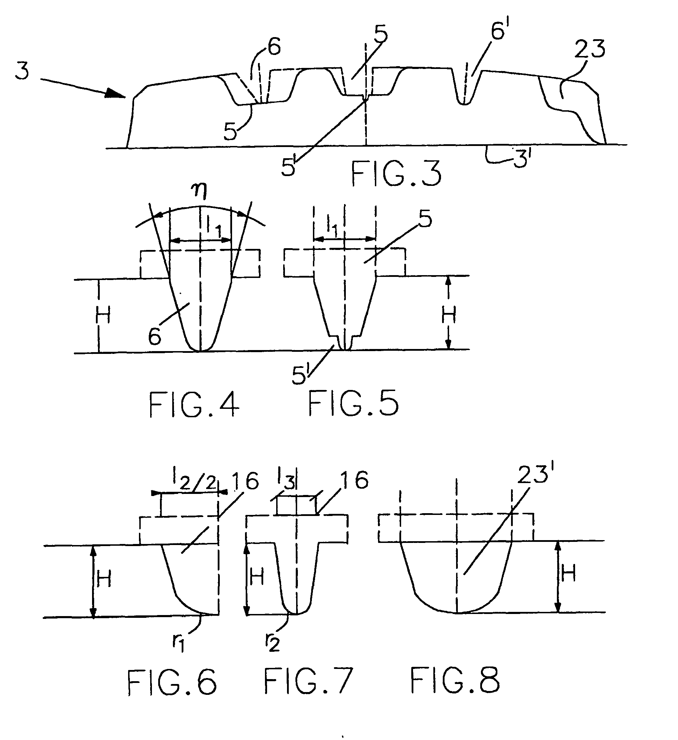

As shown in Figs 3, 4 and 5, each circumferential groove 5, 6, 6' has a V-shaped cross section; in other words the sides of the groove converge towards the bottom of the groove: preferably, these sides form an angle η of not less than 30° between them.

The aforesaid circumferential grooves preferably have a width l₁ in the range from 12 mm to 17 mm and a depth H in the range from 15 mm to 24 mm. In the illustrated embodiment, H is equal to 19 mm. The geometrical dimensions of said grooves are selected in a suitable way such that stones and/or deposits, which may be picked up by the tread during the travel of the tyre, are not retained, but can easily be removed from the tread, or leave the latter spontaneously in order to prevent any possible damage to the bottom of said grooves.

In another preferred embodiment of the present invention, the bottom of central circumferential groove 5 has a narrow indentation 5' (Figs 2, 3 and 5) whose width and depth preferably do not exceed 4 mm, being 3.5 mm and 3 i mm respectively for the described prototype. The purpose of this indentation is to prevent the initiation of tears on the bottom of said groove 5 due to any trapping of stones and/or other deposits.

Preferably, each circumferential groove 5, 6, 6' within a single pitch "p" has at least one blind transverse cut 16 extending axially from both sides of the groove, in such a way that it forms a third ground-gripping front.

In the described embodiment, three circumferential grooves 5, 6, 6' are identical to each other and the blind transverse cuts belonging to two adjacent circumferential grooves are staggered in the circumferential direction.

In a preferred embodiment of the invention, the profile of the blind transverse cuts is linked with the profile of the corresponding circumferential groove by means of curvilinear portions, preferably in the form of circle arcs. These profiles consist of the edges of the cuts and of the groove on the surface of the tread. In fact, this constructional solution protects the elastomeric material of the tread from the initiation of irregular and/or premature wear and from tears which would cause unacceptable damages to the tread. Even more preferably, the whole surface profile of the circumferential grooves, including the transverse cuts, is made with a rounded shape, free of sharp corners.

In other words, by contrast with the prior art tread, the zigzag circumferential grooves of the tread according to the present invention, in the preferred embodiment shown in Fig. 2, have a particularly rounded profile along which there are no sharp-edged shapes and/or sharp corners, especially in particularly critical areas such as those which mark the changes of direction or the linking areas between the groove portion with the zigzag configuration and the blind transverse cuts.

As shown in Fig. 2, the circumferential extension of each blind transverse cut 16 contains a substantially rectilinear portion 11 of the corresponding circumferential groove orientated in one of the two separate directions which, as stated above, represent the changes of direction which generate the zigzag configuration defined, in each pitch "p", by aforesaid broken line 9.

More precisely, the axis of the blind transverse cuts consists of a three-part broken line 21, 11 and 22, whose central part is formed by aforesaid rectilinear portion 11.

Overall, therefore, blind transverse cut 16 has, in the substantially axial direction, a configuration of the zigzag type defined by the succession of said rectilinear portions 21, 11, 22.

End parts 21 and 22 of this broken line intersect the lateral ends of blind transverse cut 16 at two points, namely 17 and 18 respectively, which lie on the same straight line "t" which is substantially perpendicular to the equatorial plane. In the embodiment shown in Fig. 2, the straight line "t" passes through the centre of substantially rectilinear portion 11.

Blind transverse cut 16 is substantially axially delimited as to width by the two ends marked by aforesaid points 17 and 18.

More particularly, two segments 21, 22 extending in each blind transverse cut 16, between aforesaid ends 17, 18 of the same cut and ends 19, 20 of substantially rectilinear portion 11, are preferably of equal length and both inclined at an angle γ, preferably of identical value, with respect to the straight line "t" mentioned above.

Preferably, this angle γ has a value not exceeding 25°, in such a way that the radii of curvature "r" of the curvilinear surfaces which link the walls of the blind transverse cut with the walls of the circumferential groove are sufficiently large to avoid, or at least to reduce, the aforesaid risks of tearing and irregular and/or premature wear of the elastomeric material of the tread. Preferably, "r" is at least equal to 5 mm.

In order to minimize the aforesaid risks and to maximize the resistance of circumferential ribs 7, 7', 8, 8' to tearing and to the aforesaid kinds of wear, the applicant has found to preferably limit the dimensions of the blind transverse cuts by specifying particular values of the ratios between the aforesaid dimensions and the dimensions of both the zigzag circumferential grooves and the tread as a whole.

More specifically, the preferred values of the dimensions and ratios are those shown in the following Table 1, where the symbols have the following meanings (see the attached figures):
- "W" is the width of the tread pattern (Fig. 2);
- "lₐ" is the axial width of the blind transverse cut (Fig. 2);
- "I₁" is the width of the circumferential groove (Fig. 2 - section IV-IV; Figs 4 and 5);
- "l₂" is the length of the blind transverse cut along portion 21 (Fig. 2 - section VI-VI; Fig. 6)
- l₃" is the width of the blind transverse cut along section VII-VII (Fig. 2; Fig. 7).

**Table 1**

| Dimension/Ratio | Range of values |
|---|---|
| "W" (mm) | 220 - 240 |
| "lₐ" (mm) | 35 - 41 |
| "lₐ" /"W" | 0.15 - 0.18 |
| "l₁" (mm) | 12 - 17 |
| "l₁" /" W" | 0.6 - 0.8 |
| "l₂" (mm) | 13 - 16.5 |
| "l₃" (mm) | 8 - 11 |

The walls which delimit each blind transverse cut 16 advantageously converge towards the bottom of the cut and are linked to the bottom by curvilinear surfaces represented on the cross section by corresponding circle arcs. With reference to the embodiments indicated in the cross sections of Fig. 6 and 7, these circle arcs have respective radii of curvature "r₁", equal to 7 mm, and "r₂", equal to 3.5 mm, said values being suitably selected in such a way as to prevent undesired tearing of the elastomeric material at the bottom of the indentation.

Additionally, in order to achieve a good traction, it is preferable for the depth of blind transverse cuts 16 to be equal to the maximum depth "H" of circumferential grooves 5, 6, 6'.

With reference to each circumferential groove 5, 6, 6', where "b" and "c" (see Fig. 2) denote the centres of two consecutive blind transverse cuts belonging to a single circumferential groove, and "a" denotes the centre of the portion of said circumferential groove lying between said two consecutive blind transverse cuts, the centres ''b'' and "c" are spaced apart from the centre "a" by half of one pitch.

As shown in Fig. 2, in the illustrated embodiment the arrangement of the adjacent circumferential grooves is such that said circumferential grooves are staggered in the circumferential direction.

In fact, for a single pitch "p", the two centres (a and a') of the lateral circumferential grooves 6 and 6' respectively are positioned along a straight line "L" which is inclined with respect to the axial direction, and on which the centre "b" of blind transverse cut 16 of central circumferential groove 5 is also positioned.

More precisely, this straight line "L" forms with the aforesaid axial direction an angle δ which is preferably in the range from 4° to 15°.

In a preferred embodiment of the invention, the tread comprises further traction elements 23, 23', in the form of a plurality of notches positioned on shoulder ribs 7 and 7' respectively, in an axially outward position of these ribs.

Each notch 23, 23' is delimited, in the circumferential direction, by at least two end walls, forming front walls 24, 24' and rear walls 25, 25' respectively according to the direction of travel F, and in the transverse direction by a wall 26, 26' which is substantially parallel to substantially rectilinear portions 40, 41 of adjacent circumferential grooves 6, 6'.

End walls 24, 25 (and 24', 25'), which are preferably parallel to each other, form an angle ε of 17°, preferably in the range from 10° to 30°, with respect to the axial direction and are linked with longitudinal wall 26 (and 26') by curvilinear surfaces having radii of curvature "r₃" and "r₄" respectively. Said radii of curvature are preferably longer than 4 mm.

In order to ensure good traction, the axial extension "Iₛ" of each cut 23, 23' is equal to at least 8% of the width "W" of the tread, and the depth of notch 23, 23' is equal to "H" (Fig. 8). Preferably, the walls of notch 23, 23' are linked with the bottom by a curvilinear surface having a radius of curvature which is longer than 8 mm.

As shown in Fig. 2, notches 23, 23' present in the circumferential ribs 7 and 7' respectively are circumferentially staggered with respect to blind transverse cuts 16 of the adjacent circumferential grooves.

Preferably, also the centres (d and d') of notches 23 and 23' of circumferential ribs 7 and 7' are positioned, within a single pitch "p", on the aforesaid straight line "L" joining the centres (a and a') of identical portions 11 of circumferential grooves 6, 6' with the centre (b) of central circumferential groove 5.

One of the principal characteristics of the tread according to the present invention consists in the combination of circumferential grooves 5, 6, 6' of considerable depth with particularly strong circumferential ribs 7, 7', 8, 8'.

The strength of axially inner ribs 8, 8' is due to the fact that the ends of blind transverse cuts 16 belonging to two adjacent circumferential grooves, in other words ends L7, 18 facing each other, although staggered in the circumferential direction, are aligned on two planes k and k' respectively, which are parallel to each other and to the equatorial plane X-X, and are suitably spaced apart from each other.

As shown in Fig. 2, these pairs of planes k, k' are spaced apart by a predetermined and constant amount w, and the tread portion lying between said planes is preferably free of sipes and/or grooves which, over time, could initiate tears of the elastomeric material or give rise to phenomena of structural weakening.

This means, therefore, that each of axially inner ribs 8, 8' comprises a solid circumferential portion (lying between aforesaid planes k, k') capable of imparting a high directional stability and high abrasion resistance to said ribs.

The same characteristic is preferably also provided to lateral ribs 7 and 7': Fig. 2 shows that also the axially inner ends of notches 23 lie on a single plane V, parallel to the equatorial plane X-X and to a plane V' on which lie the axially outer ends of blind transverse cuts 16 present in adjacent circumferential groove 6. The planes V-V' are spaced apart by an amount equal to w₀.

In a similar way to that described previously for ribs 8 and 8', also the tread portion lying between the planes V-V' of rib 7 is preferably continuous, in other words free of sipes or grooves. This tread portion therefore imparts high strength and high abrasion resistance to aforesaid rib 7.

The tyre according to the invention has a tread structure which is preferably symmetrical, and therefore the description and illustration (planes V and V' - Fig. 2) provided above in relation to circumferential rib 7 is intended to be applied also to rib 7'.

Table 2 shows some preferred values of the distances w and w₀, and of their ratios to the width "W" of the tread.

**Table 2**

| Value | Range of values |
|---|---|
| "w" (mm) | 8.5 - 15.5 |
| "w"/"W" | 0.03 - 0.07 |
| "w₀" (mm) | 15 - 19.5 |
| "w₀" /"W" | 0.6 - 0.9 |

Since, as is well known to those skilled in the art, for a given abrasion resistance of the mixture, the mileage is proportional to the quantity of abradable rubber (depth of the grooves present in the tread) and to the specific abrasion during the use of the tyre, the high strength of ribs 7, 7', 8, 8' (in other words the big area of the solid parts of the aforesaid ribs) and the considerable depth of grooves 5, 6, 6' of the tread according to the present invention enable a high mileage to be obtained.

On the other hand, the presence of extensive portions of tread of a continuous type, in other words without transverse cuts or grooves, in the circumferential ribs has no negative effect on the traction and lateral roadholding conditions of the tread.

This is because traction is ensured, within a single pitch, by the presence of a blind transverse cut possessed by each circumferential groove, and also by the presence of two separate gripping areas 12, 13 in the direction of travel F (and of two separate gripping areas 14, 15 in the direction opposite to F), created by the changes in direction of each circumferential groove within a single pitch "p".

Furthermore, high traction and lateral roadholding are also achieved by means of additional notches 23, 23' in circumferential shoulder ribs 7, 7', having a depth preferably equal to that of circumferential grooves 5, 6, 6'.

Moreover, this traction is obtained progressively promoting regular wear and lower noise of the tread thanks to the staggered positions of the traction elements identified above, such as blind transverse cuts 16 and notches 23, 23' of circumferential shoulder ribs 7, 7'.

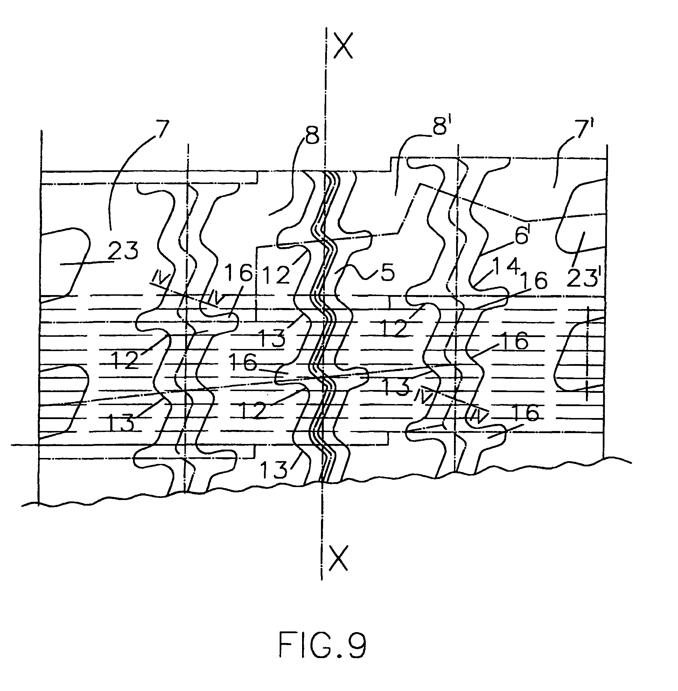

Fig. 9 shows a partial plan view of a tread according to the invention, in the embodiment shown in Fig. 2. Said Fig. 9 shows a plurality of lines positioned perpendicular to the equatorial plane X-X and representing the advance of the ground impact fronts of the tyre during the travel of the tyre.

If the direction of rolling F of Fig. 2 is assumed, the advance of the impact fronts shows that a given blind transverse cut (for example, blind transverse cut 16 of circumferential groove 6) starts to grip when a preceding blind transverse cut (for example, blind transverse cut 16 of circumferential groove 6') has practically terminated its gripping action.

In the same way, in a single pitch "p", also two gripping areas 12, 13 (as well as gripping areas 14, 15 in the case of a direction of travel opposite to F), produced as a result of the changes of direction of the zigzag configuration of each circumferential groove 5, 6, 6', progressively enter the footprint area with a continuity of movement which prevents the development of beats and discontinuities which would be associated with a variation of the axial extension of the impact fronts entering or leaving the footprint area at the same time, the result of which would be a qualitative deterioration of performance in terms of roadholding and noise.

Preferably, as may be seen from the configuration shown in Fig. 9, within a single pitch "p", at the moment at which the front of advance does not include either a blind transverse cut 16 or gripping areas 12, 13, said front of advance includes a shoulder notch 23, 23' which provides a ground gripping point for the tread of the tyre according to the invention.

This means, therefore, that in any direction of travel of the tyre, in other words independently of the direction of fitting of the tyre on the vehicle, there is an advantageous continuous traction capacity of the tread which gives a positive contribution to comfort, stability of travel and longer mileage.

A person skilled in the art, having understood the invention as described above, will be capable of making all the necessary choices, variations and modifications of the variables associated with the invention to solve the specific technical problem faced by him, in other words to give priority to a specific aspect of behaviour (for example the mileage rather than the silence of running by increasing the depth of the grooves, or the fraction rather than the wear by increasing the width of the transverse inclined cuts, etc.) according to the severity of the operating conditions for the particular application of the vehicle which is to be fitted with the tyres according to the invention.

## Claims

1. Tyre for the wheels of vehicles, particularly for fitting on the steering axles of medium and heavy duty vehicles on mixed routes, comprising a carcass, a tread (3) placed on the crown of said carcass and a belt structure (4) interposed between said carcass and said tread (3), said tread (3) being provided with a relief pattern comprising at least two circumferential grooves (5,6,6') with a zigzag configuration, which form at least three circumferential ribs (7,7',8,8'), namely two shoulder ribs and at least one central rib, each of said at least two circumferential grooves (5,6,6') having a shape which is repeated identically according to a predetermined circumferential pitch (p), whereby:
a) each of said at least two zigzag circumferential grooves (5,6,6') within a single pitch (p) comprises at least two different directions, which are different from the circumferential direction and which generate at least two ground-gripping fronts in each of the two travel directions of said tyre;
b) each of said at least two zigzag circumferential grooves (5,6,6') within a single pitch (p) has at least one blind transverse cut (16) intersecting said circumferential groove and extending axially from both sides of said circumferential groove (5,6,6'), which generates a third ground-gripping front;
c) the axially opposite ends (17,18) of the blind transverse cuts (16) belonging to two adjacent circumferential grooves (5, 6, 6') facing each other, even when staggered in the circumferential direction, are positioned on at least two separate planes (k,k'), parallel to each other and to the equatorial plane (X-X) of said tyre (100), at least two of said planes (k,k') delimiting between them a continuous portion of at least one circumferential rib (7, 7', 8, 8'), said continuous portion having a constant axial width (w);**characterized in that**
the axially opposite ends (17,18) of said blind transverse cuts (16) belonging to the same circumferential groove (5,6,6') are disposed on a straight line (t) which is substantially perpendicular to the equatorial plane (X-X).

2. Tyre according to Claim 1, **characterized in that** each of said at least two separate directions is repeated at least twice within a single pitch (p).

3. Tyre according to Claim 1, **characterized in that** at least one of said two separate directions is inclined with respect to the circumferential direction at an angle (α) in the range from 30° to 55°.

4. Tyre according to Claim 1, **characterized in that** at least one of said two separate directions is inclined with respect to the circumferential direction at an angle (β) in the range from 12° to 25°.

5. Tyre according to Claim 1, **characterized in that** the ratio between the linear extension of the mid-line of each of said at least two circumferential grooves (5,6,6') within one pitch and the length of said pitch (p) is not less than 1.12.

6. Tyre according to Claim 1, **characterized in that** the ratio between the width of said continuous portion of at least one circumferential rib (7,7',8,8') and the width of said tread (3) is in the range from 0.03 to 0.07.

7. Tyre according to Claim 1, **characterized in that** the depth of said blind transverse cuts (16) is equal to the depth of the corresponding circumferential grooves (5, 6, 6').

8. Tyre according to Claim 1, **characterized in that** the circumferential extension of said blind transverse cuts (16) contains a rectilinear portion of the corresponding circumferential groove (5,6,6'), orientated in one of said at least two separate directions.

9. Tyre according to Claim 8, **characterized in that** the axis of said blind transverse cuts (16) consists of a broken line with three parts (11, 21, 22), of which said rectilinear portion (11) forms the central part.

10. Tyre according to Claim 9, **characterized in that** the end parts (21,22) of said broken line are inclined at an angle (γ) of not more than 25° with respect to the axial direction.

11. Tyre according to Claim 10, **characterized in that** said angles are equal to each other.

12. Tyre according to Claim 9, **characterized in that** the end parts (21,22) of said broken line are of equal length.

13. Tyre according to Claim 1, **characterized in that** the ratio between the axial extension of said blind transverse cuts (16) and the width of said tread (3) is in the range from 0.15 to 0.18.

14. Tyre according to Claim 1, **characterized in that** the link between the profile of said blind transverse cuts (16) and the contour profile of the corresponding circumferential groove (5,6,6') is a profile of the curvilinear type.

15. Tyre according to Claim 1, **characterized in that** said blind transverse cuts (16) belonging to separate circumferential grooves (5, 6, 6') are staggered in the circumferential direction.

16. Tyre according to Claim 1, **characterized in that** the straight line (L) joining identical points of two adjacent circumferential grooves (6,6') within a single pitch (p) forms an angle (δ) which is preferably in the range from 4° to 15° with the axial direction.

17. Tyre according to Claim 1, **characterized in that** it comprises at least three zigzag circumferential grooves (5,6,6'), namely a central groove (5) and two lateral grooves (6,6') which are axially outside said central groove (5).

18. Tyre according to Claim 17, **characterized in that** said at least three circumferential grooves (5,6,6') are of the same shape.

19. Tyre according to Claim 1, **characterized in that** it comprises a plurality of notches (23, 23') in an axially outer position on at least one circumferential shoulder rib (7,7').

20. Tyre according to Claim 19, **characterized in that** the depth of said notches (23,23') is equal to the depth of said circumferential grooves (6,6'),

21. Tyre according to Claim 19, **characterized in that** each of said notches (23, 23') comprises at least two end walls and at least one lateral wall with respect to the direction of travel of said tyre (100).

22. Tyre according to Claim 21, **characterized in that** said end walls and said longitudinal wall are linked together by surfaces of the curvilinear type.

23. Tyre according to Claim 19, **characterized in that** within a single pitch (p) the centres (d,d')of said notches belonging to the shoulder ribs (7,7') lie on the straight line (L) passing through the centres (a,a') of the identical portions (11) of the two axially outermost circumferential grooves (6,6').

24. Tyre according to Claim 1, **characterized in that** the walls of said circumferential grooves (5,6,6') and of said blind transverse cuts (16) are linked by curvilinear surfaces having a radius of curvature of at least 5 mm.

25. Tyre according to Claim 1, **characterized in that** the walls of said circumferential grooves (5,6,6') and of said blind transverse cuts (16) are linked with the bottom by curvilinear surfaces having a radius of curvature of at least 3.5 mm.

26. Tyre according to Claim 1, **characterized in that** the lateral walls of each of said circumferential grooves (5,6,6') converge radially inwards at an angle (η) of not less than 30°.

27. Tyre according to Claim 1, **characterized in that** the aforesaid circumferential grooves (5,6,6') have widths in the range from 12 mm to 17 mm and depths in the range from 15 mm to 24 mm.

28. Tyre according to Claim 20, **characterized in that** the bottom of said central circumferential groove (5,6,6') comprises an indentation.

## Patentansprüche

1. Reifen für Räder von Kraftfahrzeugen, insbesondere zum Anbringen an den Lenkachsen von Fahrzeugen für mittelschwere Last und Schwerlast auf gemischten Strecken, wobei der Reifen eine Karkasse, eine auf der Krone der Karkasse angeordnete Lauffläche (3) und einen zwischen der Karkasse und der Lauffläche (3) angeordneten Gurtaufbau (4) aufweist, die Lauffläche (3) mit einem Reliefmuster versehen ist, das wenigstens zwei Umfangsnuten (5, 6, 6') mit einer Zickzackform aufweist, die wenigstens drei Umfangsrippen (7, 7', 8, 8') bilden, nämlich zwei Schulterrippen und wenigstens eine zentrale Rippe, und jede der wenigstens zwei Umfangsnuten (5, 6, 6') eine Form hat, die entsprechend einer vorgegebenen Umfangsteilung (p) identisch wiederholt wird, und wobei
a) jede der wenigstens zwei zickzackförmigen Umfangsnuten (5, 6, 6') innerhalb einer einzigen Teilung (p) wenigstens zwei unterschiedliche Richtungen aufweist, die zu der Umfangsrichtung verschieden sind und wenigstens zwei Bodenhaftungs-Frontflächen in jeder der beiden Laufrichtungen des Reifens erzeugen,
b) jede der wenigstens zwei zickzackförmigen Umfangsnuten (5, 6, 6') innerhalb einer einzigen Teilung (p) wenigstens einen blinden Quereinschnitt (16) hat, der die Umfangsnut schneidet und sich axial von beiden Seiten der Umfangsnut (5, 6, 6') aus erstreckt, die eine dritte Bodenhaftungs-Frontfläche erzeugt,
c) die axial gegenüberliegenden Enden (17, 18) der blinden Quereinschnitte (16), die zu zwei benachbarten Umfangsnuten (5, 6, 6') gehören, die einander zugewandt sind, auch wenn sie in der Umfangsrichtung versetzt sind, auf wenigstens zwei getrennten Ebenen (k, k') angeordnet sind, die zueinander und zu der Äquatorialebene (X-X) des Reifens (100) parallel sind, und wenigstens zwei der Ebenen (k, k') zwischen sich einen fortlaufenden Abschnitt wenigstens einer Umfangsrippe (7, 7', 8, 8') begrenzen, der eine konstante axiale Breite (w) hat,
**dadurch gekennzeichnet,**
- **dass** die axial gegenüberliegenden Enden (17, 18) der blinden Quereinschnitte (16), die zu der gleichen Umfangsnut (5, 6, 6') gehören, auf einer geraden Linie (t) angeordnet sind, die im Wesentlichen senkrecht zur Äquatorialebene (X-X) ist.

2. Reifen nach Anspruch 1, **dadurch gekennzeichnet, dass** jede der wenigstens zwei gesonderten Richtungen sich wenigstens zweimal innerhalb einer einzigen Teilung (p) wiederholt.

3. Reifen nach Anspruch 1, **dadurch gekennzeichnet, dass** wenigstens eine der beiden gesonderten Richtungen bezüglich der Umfangsrichtung mit einem Winkel (α) im Bereich von 30° bis 55° geneigt ist.

4. Reifen nach Anspruch 1, **dadurch gekennzeichnet, dass** wenigstens eine der beiden gesonderten Richtungen bezüglich der Umfangsrichtung mit einem Winkel (β) im Bereich von 12° bis 25° geneigt ist.

5. Reifen nach Anspruch 1, **dadurch gekennzeichnet, dass** das Verhältnis zwischen der linearen Erstreckung der Mittellinie einer jeden der wenigstens zwei Umfangsnuten (5, 6, 6') innerhalb einer Teilung und der Länge der Teilung (p) nicht kleiner als 1,12 ist.

6. Reifen nach Anspruch 1, **dadurch gekennzeichnet, dass** das Verhältnis zwischen der Breite des fortlaufenden Abschnitts wenigstens einer Umfangsrippe (7, 7', 8, 8') und der Breite der Lauffläche (3) in dem Bereich von 0,03 bis 0,07 liegt.

7. Reifen nach Anspruch 1, **dadurch gekennzeichnet, dass** die Tiefe der blinden Quereinschnitte (16) gleich der Tiefe der entsprechenden Umfangsnuten (5, 6, 6') ist.

8. Reifen nach Anspruch 1, **dadurch gekennzeichnet, dass** die Umfangserstreckung der blinden Quereinschnitte (16) einen geradlinigen Abschnitt der entsprechenden Umfangsnut (5, 6, 6') enthält, der in einer der wenigstens zwei gesonderten Richtungen ausgerichtet ist.

9. Reifen nach Anspruch 8, **dadurch gekennzeichnet, dass** die Achse der blinden Quereinschnitte (16) aus einer unterbrochenen Linie mit drei Teilen (11, 21, 22) besteht, von denen der geradlinige Teil (11) den Mittelteil bildet.

10. Reifen nach Anspruch 9, **dadurch gekennzeichnet, dass** die Endteile (21, 22) der unterbrochenen Linie mit einem Winkel (γ) von nicht mehr als 25° bezogen auf die Axialrichtung geneigt sind.

11. Reifen nach Anspruch 10, **dadurch gekennzeichnet, dass** die Winkel zueinander gleich sind.

12. Reifen nach Anspruch 9, **dadurch gekennzeichnet, dass** die Endteile (21, 22) der unterbrochenen Linie gleiche Längen haben.

13. Reifen nach Anspruch 1, **dadurch gekennzeichnet, dass** das Verhältnis zwischen der axialen Erstreckung der blinden Quereinschnitte (16) und der Breite der Lauffläche (3) im Bereich von 0,15 bis 0,18 liegt.

14. Reifen nach Anspruch 1, **dadurch gekennzeichnet, dass** die Verbindung zwischen dem Profil der blinden Quereinschnitte (16) und dem Konturprofil der entsprechenden Umfangsnut (5, 6, 6') ein Profil mit gekrümmter Form ist.

15. Reifen nach Anspruch 1, **dadurch gekennzeichnet, dass** die blinden Quereinschnitte (16), die zu gesonderten Umfangsnuten (5, 6, 6') gehören, in der Umfangsrichtung versetzt sind.

16. Reifen nach Anspruch 1, **dadurch gekennzeichnet, dass** die gerade Linie (L), die identische Punkte von zwei benachbarten Umfangsnuten (6, 6') innerhalb einer einzigen Teilung (p) verbindet, einen Winkel (δ) bildet, der vorzugsweise im Bereich von 4° bis 15° zur Axialrichtung liegt.

17. Reifen nach Anspruch 1, **dadurch gekennzeichnet, dass** er wenigstens drei zickzackförmige Umfangsnuten (5, 6, 6') aufweist, nämlich eine zentrale Nut (5) und zwei seitliche Nuten (6, 6'), die axial außerhalb der zentralen Nut (5) liegen.

18. Reifen nach Anspruch 17, **dadurch gekennzeichnet, dass** die wenigstens drei Umfangsnuten (5, 6, 6') die gleiche Form haben.

19. Reifen nach Anspruch 1, **dadurch gekennzeichnet, dass** er eine Vielzahl von Einkerbungen (23, 23') in einer axial äußeren Position auf wenigstens einer Umfangsschulterrippe (7, 7') aufweist.

20. Reifen nach Anspruch 19, **dadurch gekennzeichnet, dass** die Tiefe der Einkerbungen (23, 23') gleich der Tiefe der Umfangsnuten (6, 6') ist.

21. Reifen nach Anspruch 19, **dadurch gekennzeichnet, dass** jede der Einkerbungen (23, 23') wenigstens zwei Stirnwände und wenigstens eine Seitenwand bezüglich der Laufrichtung des Reifens (100) aufweist.

22. Reifen nach Anspruch 21, **dadurch gekennzeichnet, dass** die Stirnwände und die Längswand miteinander durch Flächen mit gekrümmter Form verbunden sind.

23. Reifen nach Anspruch 19, **dadurch gekennzeichnet, dass** innerhalb einer einzigen Teilung (p) die Mitten (d, d') der Einkerbungen, die zu den Schulterrippen (7, 7') gehören, auf der geraden Linie (L) liegen, die durch die Mitten (a, a') der identischen Abschnitte (11) der beiden axial äußersten Umfangsnuten (6, 6') hindurchgeht.

24. Reifen nach Anspruch 1, **dadurch gekennzeichnet, dass** die Wände der Umfangsnuten (5, 6, 6') und der blinden Quereinschnitte (16) durch gekrümmte Flächen verbunden sind, die einen Krümmungsradius von wenigstens 5 mm haben.

25. Reifen nach Anspruch 1, **dadurch gekennzeichnet, dass** die Wände der Umfangsnuten (5, 6, 6') und der blinden Quereinschnitte (16) mit dem Boden durch gekrümmte Flächen verbunden sind, die einen Krümmungsradius von wenigstens 3,5 mm haben.

26. Reifen nach Anspruch 1, **dadurch gekennzeichnet, dass** die Seitenwände einer jeden der Umfangsnuten (5, 6, 6') radial nach innen mit einem Winkel (η) von nicht weniger als 30° konvergieren.

27. Reifen nach Anspruch 1, **dadurch gekennzeichnet, dass** die erwähnten Umfangsnuten (5, 6, 6') Breiten im Bereich von 12 mm bis 17 mm und Tiefen im Bereich von 15 mm bis 24 mm haben.

28. Reifen nach Anspruch 20, **dadurch gekennzeichnet, dass** der Boden der zentralen Umfangsnut (5, 6, 6') eine Vertiefung aufweist.

## Revendications

1. Pneu pour roues de véhicules, en particulier pour les essieux de direction de véhicules semi-lourds et lourds sur trajets mixtes, comprenant une carcasse, une bande de roulement (3) placée au sommet de ladite carcasse et une structure de ceinture (4) intercalée entre ladite carcasse et ladite bande de roulement (3), ladite bande de roulement (3) étant munie d'un motif en relief comprenant au moins deux rainures périphériques (5, 6, 6') ayant une configuration en zigzag, qui forment au moins trois nervures périphériques (7, 7', 8, 8'), à savoir deux nervures d'épaulement et au moins une nervure centrale, chacune desdites au moins deux rainures périphériques (5, 6, 6') ayant une forme qui est répétée à l'identique suivant un pas périphérique prédéterminé (p), dans lequel :
a) chacune desdites au moins deux rainures périphériques en zigzag (5, 6, 6') dans un seul pas (p) comprend au moins deux directions différentes, qui sont différentes de la direction périphérique et qui génèrent au moins deux faces d'attaque d'adhérence au sol dans chacun des deux sens de déplacement dudit pneu ;
b) chacune desdites au moins deux rainures périphériques en zigzag (5, 6, 6') dans un seul pas (p) comporte au moins une entaille transversale borgne (16) qui coupe ladite rainure périphérique et qui s'étend axialement depuis chaque côté de ladite rainure périphérique (5, 6, 6'), qui génère une troisième face d'attaque d'adhérence au sol ;
c) les extrémités axialement opposées (17, 18) des entailles transversales borgnes (16) appartenant à deux rainures périphériques voisines (5, 6, 6') se faisant face, même lorsqu'elles sont en quinconce dans la direction périphérique, sont positionnées sur au moins deux plans distincts (k, k'), parallèles entre eux et parallèles au plan équatorial (X-X) dudit pneu (100), au moins deux desdits plans (k, k') délimitant entre eux une partie continue d'au moins une nervure périphérique (7, 7', 8, 8'), ladite partie continue ayant une largeur axi ale constante (w) ; **caractérisé en ce que**
les extrémités axialement opposées (17, 18) desdites entailles transversales borgnes (16) appartenant à la même rainure périphérique (5, 6, 6') sont placées sur une ligne droite (t) qui est substantiellement perpendiculaire au plan équatorial (X-X).

2. Pneu selon la revendication 1, **caractérisé en ce que** chacune desdites au moins deux directions distinctes est répétée au moins deux fois à l'intérieur d'un seul pas (p).

3. Pneu selon la revendication 1, **caractérisé en ce qu'**au moins l'une desdites deux directions distinctes est inclinée par rapport à la direction périphérique suivant un angle (α) compris dans l'intervalle de 30° à 55°.

4. Pneu selon la revendication 1, **caractérisé en ce qu'**au moins l'une desdites deux directions distinctes est inclinée par rapport à la direction périphérique suivant un angle (β) compris dans l'intervalle de 12° à 25°.

5. Pneu selon la revendication 1, **caractérisé en ce que** le rapport entre l'étendue linéaire de la ligne médiane de chacune desdites au moins deux rainures périphériques (5, 6, 6') dans un seul pas et la longueur dudit pas (p) est supérieur ou égal à 1,12.

6. Pneu selon la revendication 1, **caractérisé en ce que** le rapport entre la largeur de ladite partie continue d'au moins une nervure périphérique (7, 7', 8, 8') et la largeur de ladite bande de roulement (3) se trouve dans l'intervalle de 0,03 à 0,07.

7. Pneu selon la revendication 1, **caractérisé en ce que** la profondeur desdites entailles transversales borgnes (16) est égale à la profondeur des rainures périphériques (5, 6, 6') correspondantes.

8. Pneu selon la revendication 1, **caractérisé en ce que** l'étendue périphérique desdites entailles transversales borgnes (16) contient une partie rectiligne de la rainure périphérique (5, 6, 6') correspondante, orientée selon l'une desdites au moins deux directions distinctes.

9. Pneu selon la revendication 8, **caractérisé en ce que** l'axe desdites entailles transversales borgnes (16) consiste en une ligne brisée à trois parties (11, 21, 22), dont ladite partie rectiligne (11) forme la partie centrale.

10. Pneu selon la revendication 9, **caractérisé en ce que** les parties d'extrémité (21, 22) de ladite ligne brisée sont inclinées d'un angle (γ) inférieur ou égal à 25° par rapport à la direction axiale.

11. Pneu selon la revendication 10, **caractérisé en ce que** lesdits angles sont égaux entre eux.

12. Pneu selon la revendication 9, **caractérisé en ce que** les parties d'extrémité (21, 22) de ladite ligne brisée sont de longueur égale.

13. Pneu selon la revendication 1, **caractérisé en ce que** le rapport entre l'étendue axiale desdites entailles transversales borgnes (16) et la largeur de ladite bande de roulement (3) se trouve dans l'intervalle de 0,15 à 0,18.

14. Pneu selon la revendication 1, **caractérisé en ce que** le lien entre le profil desdites entailles transversales borgnes (16) et le profil de contour de la rainure périphérique (5, 6, 6') correspondante est un profil de type curviligne.

15. Pneu selon la revendication 1, **caractérisé en ce que** lesdites entailles transversales borgnes (16) appartenant à des rainures périphériques (5, 6, 6') distinctes sont en quinconce dans la direction périphérique.

16. Pneu selon la revendication 1, **caractérisé en ce que** la ligne droite (L) qui relie les points identiques de deux rainures périphériques voisines (6, 6') dans un seul pas (p) forme un angle (δ) avec la direction axiale qui est compris de préférence dans l'intervalle de 4° à 15°.

17. Pneu selon la revendication 1, **caractérisé en ce qu'**il comprend au moins trois rainures périphériques en zigzag (5, 6, 6'), à savoir une rainure centrale (5) et deux rainures latérales (6, 6') qui sont axialement à l'extérieur par rapport à ladite rainure centrale (5).

18. Pneu selon la revendication 17, **caractérisé en ce que** lesdites au moins trois rainures périphériques (5, 6, 6') ont la même forme.

19. Pneu selon la revendication 1, **caractérisé en ce qu'**il comprend une pluralité d'encoches (23, 23') en une position axialement extérieure sur au moins une nervure d'épaulement périphérique (7, 7').

20. Pneu selon la revendication 19, **caractérisé en ce que** la profondeur desdites encoches (23, 23') est égale à la profondeur desdites rainures périphériques (6, 6').

21. Pneu selon la revendication 19, **caractérisé en ce que** chacune desdites encoches (23, 23') comprend au moins deux parois d'extrémité et au moins une paroi latérale par rapport à la direction de déplacement dudit pneu (100).

22. Pneu selon la revendication 21, **caractérisé en ce que** lesdites parois d'extrémité et ladite paroi longitudinale sont reliées par des surfaces de type curviligne.

23. Pneu selon la revendication 19, **caractérisé en ce que** dans un seul pas (p), les centres (d, d') desdites encoches appartenant aux nervures d'épaulement (7, 7') se trouvent sur la ligne droite (L) qui passe par les centres (a, a') des parties identiques (11) des deux rainures périphériques axialement les plus extérieures (6, 6').

24. Pneu selon la revendication 1, **caractérisé en ce que** les parois desdites rainures périphériques (5, 6, 6') et desdites entailles transversales borgnes (16) sont reliées par des surfaces curvilignes ayant un rayon de courbure d'au moins 5 mm.

25. Pneu selon la revendication 1, **caractérisé en ce que** les parois desdites rainures périphériques (5, 6, 6') et desdites entailles transversales borgnes (16) sont reliées au fond par des surfaces curvilignes ayant un rayon de courbure d'au moins 3,5 mm.

26. Pneu selon la revendication 1, **caractérisé en ce que** les parois latérales de chacune desdites rainures périphériques (5, 6, 6') convergent radialement vers l'intérieur suivant un angle (η) supérieur ou égal à 30°.

27. Pneu selon la revendication 1, **caractérisé en ce que** lesdites rainures périphériques (5, 6, 6') ont des largeurs comprises dans l'intervalle de 12 mm à 17 mm et des profondeurs comprises dans l'intervalle de 15 mm à 24 mm.

28. Pneu selon la revendication 20, **caractérisé en ce que** le fond de ladite rainure périphérique centrale (5, 6, 6') comprend une empreinte.
